# EUROPEAN PATENT SPECIFICATION

(11) **EP 2 466 954 B1**
(45) Date of publication and mention of the grant of the patent: **09.10.2019**
(21) Application number: 10816659.6
(22) Date of filing: 24.08.2010
(51) Int. Cl.: H04W 36/12, H04W 40/36, H04W 36/14

(54) **METHOD, SYSTEM AND ACCESS GATEWAY ROUTER FOR HANDOFF MANAGEMENT AND USER DATA MANAGEMENT WHEN HANDING OFF**
VERFAHREN, SYSTEM UND ZUGANGSGATEWAY-ROUTER FÜR WEITERLEITUNGS- UND BENUTZERDATENVERWALTUNG BEI DER WEITERLEITUNG
PROCÉDÉ, SYSTÈME ET ROUTEUR DE PASSERELLE D'ACCÈS POUR GESTION DE TRANSFERT ET GESTION DE DONNÉES D'UTILISATEUR LORS D'UN TRANSFERT

(30) Priority: 17.09.2009 CN 200910174691
(43) Date of publication of application: 20.06.2012
(73) Proprietor: ZTE Corporation, Shenzhen, Guangdong 518057 (CN)
(72) Inventor: WU, Qiang, Shenzhen Guangdong 518057 (CN); FU, Tao, Shenzhen Guangdong 518057 (CN); JIN, Youxing, Shenzhen Guangdong 518057 (CN)
(74) Representative: Peguet, Wilfried
(86) International application number: PCT/CN2010/076313
(87) International publication number: WO 2011/032455

(56) References cited:
- EP-A1- 2 480 011
- EP-A1- 2 480 033
- EP-A1- 2 482 585
- WO-A1-2009/106615
- CN-A- 1 784 072
- CN-A- 101 119 312
- CN-A- 101 119 312
- CN-A- 101 330 527
- US-A1- 2005 105 490
- MIN-KYO IN ET AL: "Splitting mechanism for IP into Identifier and Locator in NGN", TOWARD NETWORK INNOVATION BEYOND EVOLUTION : THE 9TH INTERNATIONAL CONFERENCE ON ADVANCED COMMUNICATION TECHNOLOGY ; ICACT 2007 ; PHOENIX PARK, KOREA, FEB. 12 - 14, 2007 ; PROCEEDINGS, IEEE TECHNICAL ACTIVITIES, PISCATAWAY, NJ, USA, 1 February 2007 (2007-02-01), pages 1974-1977, XP031085134, ISBN: 978-89-5519-131-8

## Description

### Technical Field

This invention relates to the field of communication technology, and in particular, to a method, system and access gateway router (AGR) for handover management of a mobile node and user data management during the handover.

### Background of the Related Art

The IP address in the transmission control protocol/internet protocol (TCP/IP) used extensively in existing Internet has double functions, not only regarded as the Locator of the communication terminal host network interface of the network layer in network topology, but also regarded as the Identifier of the host network interface of the transmission layer. The situation when the host moves has not been considered at the beginning of designing the TCP/IP. However, when it is more and more general to move the host, the semantic overload defect of this kind of IP address is obvious day by day. When the IP address of the host changes, not only the routing changes, but the Identifier of the communication terminal host also changes, thus causing the routing load more and more serious, and the changing of the host identifier also will cause the interruption of application and connection.

The problem of the Identifier and Locator separation is proposed to aim at solving the problems including the semantic over load and the serious routing load of the IP address, etc., separating the double function of the IP address, realizing supporting to the problems, such as, the mobility, multiple home-ness, dynamic re-allocation of the IP address, reduction of the routing load and the exchange visit between different network areas in next generation Internet.

In the prior art, the implement method based on the network router is one of the solutions about the Identifier and Locator separation. The prior art has proposed an implement method of mobile handover management based on the network router scheme, where the access switch router is used to notify all the access switch routers where the Correspondent Nodes (CNs) of the mobile nodes are located of the new mapping relationship of the mobile node (MN for short).

All CN information for each locally accessed MN is stored in the access switch router, which informs, according to the stored information, the access switch router where the CN is located of the new identifier mapping relationship of the MN. The number of the records of the CNs stored by the access switch router is limited and every record needs one deleting timer, to save the memory space.

In a specific embodiment, it is firstly required that the access switch router can store the records of the CNs of all the locally accessed user terminals, and secondly there is a requirement that all the access switch routers can notify the access router which the correspondent node accesses independently or with the help of the mapping server. If the mapping server cannot provide the help of forwarding the notification, then the access switch router must store the information of the access switch router where the correspondent node is located. Table 1 and table 2 are a kind of organizing mode of the locally accessed mapping table and the correspondent node mapping table stored by the access switch router in this case.

**Table 1, Identifier mapping table of the locally accessed terminal of the access switch router**

| | | | | |
|---|---|---|---|---|
| Access identifier | Router identifier | Correspondent node 1 | ... | Correspondent node N |

In table 1, the maximum number of records of the correspondent node must be limited, or else the pressure of the memory is too large.

**Table 2, Mapping identifier mapping table of the correspondent node of the access switch router**

| | | | |
|---|---|---|---|
| Access identifier | Router identifier | Access switch router of the access network | Timer |

In table 2, the record (including the access identifier and routing identifier) of every correspondent node may also require a timer, to determine that the record of a correspondent node should be deleted if there is no communication with this correspondent node for a long time to save the memory space.

The above solution mainly has the following problems:
1. there is a memory consuming to set the timer, and the way to set a deleting timer for each record reduces the number of records of correspondent nodes able to be stored, and can not save the memory space;
2. there is a certain consuming of the processing performance of the central processing unit (CPU) to set the timer, and the way to set a deleting timer for each record to limit the number of records of correspondent nodes stored by the access switch router, makes the number of the timers that the access switch router can support at the same time also become one of the limitation conditions.

In addition, the Chinese patent CN 101119312A discloses a solution for the Identifier and Locator separation. In that solution, the mobility detection of the mobile node mainly is mainly completed relying on the message interaction between the user terminal and the access switch router. The access router needs to periodically transmit the router notification, and the user terminal, relying on that router notification or link state event of the lower layer communication link to find its own movement. The user terminal, after finding its own movement, should apply for re-access to the access router, which helps to complete the authentication and assigning new terminal Locator. Then the access router further takes charge of notifying the mapping server to update the mapping relationship of the user terminal. In order to shorten the handover time correspondingly, the user terminal can broadcast a router notification request after re-establishing the link, then the access switch router replies with a router notification message including the access port identifier of the access switch router, and the user terminal then modifies the gateway and initiates the access request.

In the above-mentioned solution, the process of mobility detection of the user terminal is finished mainly by the cooperation of the user terminal with the access switch router. Under the scenario of handover, the landmark trigger condition of initiating a handover management flow is that the user terminal finds its own movement and applies for re-accessing to the access router. In the case of networking of cell mobile network, compared with the base station system, such as the base station subsystem (BSS), radio access network (RAN), evolved node B (eNodeB), etc., the user terminal does not know the radio resource distribution situation of the wireless network, and cannot finish the selection of the handover target cell. Also, there will be a greater handover time delay if the terminal initiates the handover. In addition, the mobility detection needs to be finished by the cooperation of the user terminal, and the protocol stack software of the user terminal needs to be modified, facing the obstacle of the synchronous updating of the user desktop software.

The features of the preamble of the independent claims are known from CN 101 119 312 A. Related technologies are known from WO 2009/106615 A1. Documents EP 2 480 011 A1, EP 2 480 033 A1 and EP 2 482 585 A1, published after the filing date of the present application, disclose another examples of the prior art.

### Summary of the Invention

The technical problem to be solved in the invention is to provide a method and system for handover management of a mobile node, which realizes the handover management of the mobility in an Identifier and Locator separation framework. The present invention is defined in the independent claims.

A method for handover management of a mobile node is provided, applied to an Identifier and Locator separation framework, wherein, when a current source radio access network (RAN) of a mobile node (MN) determines that the MN needs to initiate a handover, the method comprises:
the source RAN initiating a handover request comprising information of a target RAN to a first access gateway router (AGR1), and the AGR1 transmitting the handover request to a second access gateway router (AGR2) of the target RAN according to the information of the target RAN;
the AGR2, after receiving the handover request, returning a handover response; after receiving the handover response, the AGR1 transmitting a handover command to the MN; and
the MN initiating an access request to the target RAN according to the received handover command and finishing the handover to the target RAN.

The method further comprises:
the AGR2, after receiving the handover request, allocating a new route location identifier (RID) for the MN, establishing a new Identifier and Locator mapping relationship of the MN; and obtaining information of all correspondent nodes (CNs) in communication with the MN from the AGR1; and
after receiving a handover completion message transmitted by the target RAN, the AGR2 notifying the AGR where the CN is located of the new Identifier and Locator mapping relationship of the MN according to the obtained information of the CN.

The method further comprises:
the AGR2, after establishing the new Identifier and Locator mapping relationship of the MN, initiating a mapping update request to a mapping server to request to update the Identifier and Locator mapping relationship of the MN.

The method further comprises:
the AGR2, after receiving the handover request, establishing a forwarding relationship with the AGR1; and
the AGR1 transmitting a received data message transmitted towards the MN to the AGR2 during the handover or after receiving the handover completion message, and the AGR2 forwarding the data message to the MN.

The method further comprises:
in the step of the AGR2 establishing the forwarding relationship with the AGR1, the AGR2 and the AGR1 establishes the forwarding relationship by the way of tunnel capsulation, to forward the data message.

The method further comprises:
the AGR1 deleting the forwarding relationship in a certain time after establishing the forwarding relationship, and/or, the AGR2, after notifying the AGR where the CN is located of the new Identifier and Locator mapping relationship of the MN , transmitting a deleting instruction to the AGR1, and the AGR1 deleting the forwarding relationship according to the deleting instruction.

The AGR stores an Identifier and Locator mapping route table of all the CNs in communication with the MN, and performs an aging process to the mapping route table by the following way:
setting a polling timer;
when establishing entries of the mapping route table, setting a timer label for each entry, and an initialization value of the timer label being a set default integer value;
when querying a certain entry of the mapping route table every time, resetting the timer label corresponding to the entry of the mapping route table to the initialization value;
when a time cycle of the polling timer arrives, polling the mapping route table, reducing the timer label corresponding to each entry of the mapping route table in the mapping route table by 1, and deleting a certain entry of the mapping route table when detecting that the timer label of the entry of the mapping route table is 0.

A method for handover management of a mobile node is further provided, applied to an Identifier and Locator separation framework, wherein, when a current source radio access network (RAN) of a mobile node (MN) determines that the MN needs to initiate a handover, the method comprises:
the source RAN initiating a handover request including information of a target RAN to a first access gateway router (AGR1), and the AGR1 transmitting the handover request to a second access gateway router (AGR2) of the target RAN according to the information of the target RAN;
the AGR2, after receiving the handover request, allocating a new route location identifier (RID) for the MN, establishing a new Identifier and Locator mapping relationship of the MN; and obtaining information of all correspondent nodes (CNs) in communication with the MN from the AGR1;
the MN initiating an access request to the target RAN and finishing the handover to the target RAN; after receiving a handover completion message transmitted by the target RAN, the AGR2 notifying the AGR where the CN is located of the new Identifier and Locator mapping relationship of the MN according to the obtained information of the CN.

The method further comprises:
the AGR2, after establishing the new Identifier and Locator mapping relationship of the MN, initiating a mapping update request to a mapping server to request to update the Identifier and Locator mapping relationship of the MN.

The method further comprises:
the AGR2, after receiving the handover request, establishing a forwarding relationship with the AGR1; and
the AGR1 transmitting a received data message transmitted towards the MN to the AGR2 during the handover or after receiving the handover completion message, and the AGR2 forwarding to the MN.

A method of user data management of an access gateway router in a handover process of a mobile node is further provided, applied to an Identifier and Locator separation framework, wherein, when the MN hands over from a source radio access network (RAN) to a target RAN, the method comprising:
a second access gateway router (AGR2) of the target RAN allocating new route location identifier (RID) for the MN, establishing a new Identifier and Locator mapping relationship of the MN; and obtaining information of all CNs in communication with the MN from a first access gateway router (AGR1) of the source RAN; and
after the MN completes the handover, the AGR2 notifying the AGR where the CN is located of the new Identifier and Locator mapping relationship of the MN according to the obtained information of the CN.

The method further comprises:
the AGR2, after establishing a new Identifier and Locator mapping relationship of the MN, initiating a mapping update request to a mapping server to request to update the Identifier and Locator mapping relationship of the MN.

The method further comprises:
the AGR2, after receiving the handover request, establishing a forwarding relationship with the AGR1; and
the AGR1 transmitting a received data message transmitted towards the MN to the AGR2 during the handover or after receiving the handover completion message, and the AGR2 forwarding to the MN.

The method further comprises:
the AGR1 deleting the forwarding relationship in a certain time after establishing the forwarding relationship, and/or, the AGR2, after notifying the AGR where the CN is located of the new Identifier and Locator mapping relationship of the MN, transmitting a deleting instruction to the AGR1, and the AGR1 deleting the forwarding relationship according to the deleting instruction.

The AGR where the MN is located stores an Identifier and Locator mapping route table of all CNs in communication with the MN, and performs an aging processing on the mapping route table by the following way:
setting a polling timer;
when establishing entries of the mapping route table, setting a timer label for each entry, and an initialization value of the timer label being a set default integer value;
when querying a certain entry of the mapping route table every time, resetting the timer label corresponding to the entry of the mapping route table to the initialization value;
when a time cycle of the polling timer arrives, polling the mapping route table, reducing the timer label corresponding to each entry of the mapping route table in the mapping route table by 1, and deleting a certain entry of the mapping route table when detecting that the timer label of the entry of the mapping route table is 0.

A system for handover management of a mobile node is further provided, applied to an Identifier and Locator separation framework, wherein, the system comprising a mobile node (MN), a radio access network (RAN) and an access gateway router (AGR), wherein:
a current source RAN of the MN is configured to, when determining that the MN needs to initiate a handover, initiate a handover request comprising information of a target RAN to a first access gateway router (AGR1);
the AGR1 is configured to transmit the handover request to a second access gateway router (AGR2) of the target RAN according to the information of the target RAN in the received handover request;
the AGR2 is configured to, after receiving the handover request, return a handover response;
the target RAN is configured to complete the access of the MN according to the received access request, and transmit a handover completion message to the AGR2;
the MN is configured to, according to the received handover command, initiate the access request to the target RAN through the AGR2, and finish the handover to the target RAN.

The AGR comprises a route location identifier allocating module, a correspondent node information obtaining module and a mapping relationship updating module, wherein,
the route location identifier allocating module is configured to, after receiving the handover request of the MN, allocate a new route location identifier (RID) for the MN and transmit to the mapping relationship updating module;
the correspondent node information obtaining module is configured to, after receiving the handover request, obtain information of all CNs in communication with the MN from the AGR of the source RAN of the MN and transmit to the mapping relationship updating module; after receiving the request for obtaining information of the correspondent node transmitted by the AGR of the target RAN which the MN hands over to, transmit the information of all CNs in communication with the MN to the AGR of the target RAN;
the mapping relationship updating module is configured to, after receiving the new RID of the MN, establish a new Identifier and Locator mapping relationship of the MN, and notify the AGR where the CN is located the new Identifier and Locator mapping relationship of the MN according to the information of the CN.

The mapping relationship updating module of the AGR2 is further configured to, after establishing the new Identifier and Locator mapping relationship of the MN, initiate a mapping update request to a mapping server to request to update the Identifier and Locator mapping relationship of the MN.

The AGR further comprises a data forwarding module, wherein,
the data forwarding module of the AGR of the target RAN is configured to, after receiving the handover request, establish a forwarding relationship with the AGR of the source RAN, and transmit a data message transmitted towards the MN to the MN after receiving the handover completion message;
the data forwarding module of the AGR of the source RAN is configured to, according to the established forwarding relationship, transmit the received data message transmitted towards the MN to the AGR of the target RAN during the handover or after receiving the handover completion message.

The mapping relationship updating module of the AGR of the target RAN is further configured to, after notifying the new Identifier and Locator mapping relationship of the MN to the AGR where the CN is located, transmit a deleting instruction to the AGR of the source RAN;
the mapping relationship updating module of the AGR of the source RAN is further configured to, delete the forwarding relationship according to the deleting instruction, and/or, delete the forwarding relationship in a certain time after establishing the forwarding relationship.

The AGR further comprises a timing module and an entry managing module, wherein,
the timing module is configured to set a time cycle of the polling timer, and notify the entry managing module when the time cycle of the polling timer arrives;
the entry managing module is configured to store the Identifier and Locator mapping route table of all CNs in communication with the MN, set a timer label for each entry when establishing the entries of the mapping route table, and an initialization value of the timer label is a set default integer value; when querying a certain entry of the mapping route table every time, reset the timer label corresponding to the entry of the mapping route table to the initialization value; and when receiving the notification of the timing module, poll the entries of the mapping route table, reduce the timer label corresponding to each entry of the mapping route table by 1, and then delete a certain entry of the mapping route table when detecting that the timer label of the entry of the mapping route table is 0.

An access gateway router of user data management in a handover process of a mobile node is further provided, applied to an Identifier and Locator separation framework, comprising a route location identifier allocating module, a correspondent node information obtaining module and a mapping relationship updating module, wherein,
the route location identifier allocating module is configured to, after receiving a handover request of the mobile node (MN), allocate a new route location identifier (RID) to the MN and transmit the new RID to the mapping relationship updating module;
the correspondent node information obtaining module is configured to, after receiving the handover request, obtain information of all correspondent nodes (CNs) in communication with the MN from an access gateway router (AGR) of a source radio access network (RAN) of the MN and transmit to the mapping relationship updating module; after receiving the request for obtaining information of the correspondent node transmitted by the AGR of the target RAN which the MN hands over to, transmit the information of all the CNs in communication with the MN to the AGR of the target RAN;
the mapping relationship updating module is configured to, after receiving the new RID of the MN, establish a new Identifier and Locator mapping relationship of the MN, and notify the AGR where the CN is located of the new Identifier and Locator mapping relationship of the MN according to the information of the CN.

The mapping relationship updating module is further configured to, after establishing the new Identifier and Locator mapping relationship of the MN, initiate a mapping update request to a mapping server to request to update the Identifier and Locator mapping relationship of the MN.

The AGR further comprises a data forwarding module, wherein,
the data forwarding module of the AGR2 is configured to, after receiving the handover request, establish a forwarding relationship with the AGR1, and transmit a data message transmitted towards the MN to the MN after receiving the handover completion message;
the data forwarding module of the AGR1 is configured to, according to the established forwarding relationship, transmit the received data message transmitted towards the MN to the AGR2 during the handover or after receiving the handover completion message.

The mapping relationship updating module of the AGR of the target RAN is further configured to, after notifying the AGR where the CN is located of the new Identifier and Locator mapping relationship of the MN, transmit a deleting instruction to the AGR of the source RAN;
the mapping relationship updating module of the AGR of the source RAN is further configured to, delete the forwarding relationship according to the deleting instruction, and/or, delete the forwarding relationship in a certain time after establishing the forwarding relationship.

The AGR further comprises a timing module and an entry managing module, wherein,
the timing module is configured to set a time cycle of a polling timer, and notify the entry managing module when the time cycle of the polling timer arrives;
the entry managing module is configured to store the Identifier and Locator mapping route table of all CNs in communication with the MN, set a timer label for each entry when establishing the entries of the mapping route table, wherein, an initialization value of the timer label is a set default integer value; when querying a certain entry of the mapping route table every time, reset the timer label corresponding to the entry of the mapping route table to the initialization value; and when receiving the notification of the timing module, poll the entries of the mapping route table, reduce the timer label corresponding to each entry of the mapping route table by 1, and delete a certain entry of the mapping route table when detecting that the timer label of the entry of the mapping route table is 0.

Compared with the related art, the above solution has at least the following advantages.

The solution realizes the handover management of the mobility in the Identifier and Locator separation framework based on the network, provides a simple handover management procedure by combining the characteristic of the mobile communication network, provides an optimized user data management method in the handover management procedure, and makes the function distribution and the main procedure of each function entity in the handover management procedure clearly.

A method for compatible transition is provided based on the mobile communication cell network, such as the wideband code division multiple access (WCDMA), the code division multiple access (CDMA), the time division-synchronous code division multiple access (TDSCDMA), the high speed downlink packet access (HSDPA), the high speed uplink packet access (HSUPA), the long term evolution (LTE), the worldwide interoperability for microwave access (WiMax), etc., and the related procedure of mobility management in the network based Identifier and Locator separation framework is implemented by network side equipments, and there is no new function requirement for the mobile node and the mobile node can support without changing.

### Brief Description of Drawings

FIG. 1 is a schematic diagram of the network topology of a network based Identifier and Locator separation framework according to Example one of the present invention.
FIG. 2 is a schematic diagram of related interfaces of the network framework of the network based Identifier and Locator separation framework according to Example one of the present invention.
FIG. 3 is a flow chart of a method of handover management in an Identifier and Locator separation framework according to Example one of the present invention.
FIG. 4 is a schematic diagram of the network topology of an Identifier and Locator separation framework based on LISP protocol according to Example two of the present invention.
FIG. 5 is a schematic diagram of the network topology of an Identifier and Locator separation framework of an integration network according to Example three of the present invention.

### Preferred Embodiments of the Present Invention

The present invention is described in detail with reference to the accompanying drawings and in combination with examples hereinafter.

### Example one

In order to overcome the disadvantage of the related art, the present example provides a network based Identifier and Locator separation framework, of which the core idea is to divide the network into an access layer and a core layer, and there are two kinds of identifier types of the mobile nodes in the network: a user identifier (access identifier, AID for short) and routing location identifier (RID for short). A unique AID is configured for each user in the network, and that AID maintains unchanged all the time in the movement process; while in the data forwarding process, the AID can only be used in the access layer, and the RID can only be used in the core layer; when communicating in the application layer between the user terminals, the AID is used to identify the opposite end.

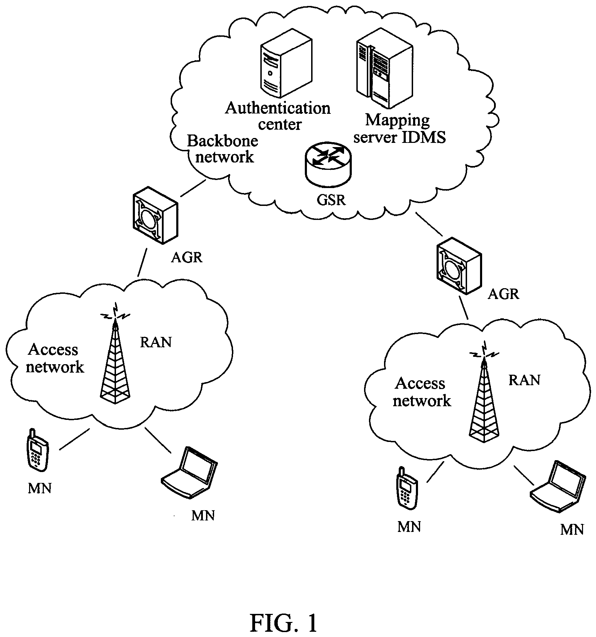

The schematic diagram of the topology of the above network based Identifier and Locator separation framework is as shown in FIG.1, wherein, the network based Identifier and Locator separation framework mainly includes: a radio access network (RAN), an access gateway router (AGR for short), a general switch router (GSR for short), a mapping server (identifier mapping server, IDMS for short), an authentication center, etc. Those are described separately as follows.

The AGR is responsible for providing access service for various mobile nodes, allocating the RID for the accessed user, and transmitting the user data message in the backbone network after encapsulating the identifier into the data message.

The AGR, when receiving the data message transmitted by the terminal, queries the AID-RID mapping table in the local cache (CACHE) according to the destination address (that is the AID of the correspondent node) in the data message. Specifically, if the corresponding AID-RID mapping entry is queried out, then the AGR encapsulates the RID of the found communication terminal in the header of the message and transmits to the backbone network to perform the forwarding processing; if the corresponding AID-RID mapping entry is not queried out, the AGR forwards the data message to the backbone network, and initiates the process of querying the AID-RID mapping information (of the correspondent node) to the IDMS, and stores the corresponding AIDc-RIDc mapping returned by the IDMS locally to be ready for querying when forwarding the message subsequently.

Or, the AGR, when having not queried out the corresponding AID-RID mapping entry, can also select not to forward the data message to the backbone network but to initiate the process of querying the AID-RID mapping information (of the correspondent node) to the IDMS, and encapsulates the found RID of the correspondent node in the header of the message and transmits to the backbone network to perform the forwarding processing after the IDMS returns the corresponding AIDc-RIDc mapping.

The AGR, when receiving the data message transmitted to the terminal, performs the de-encapsulation processing to the data message, strips the newly added header of the message including the RID in the data message, and transmits to the terminal.

The main functions of the GSR are to perform the route selection and forward the data message according to the routing location identifier (RID) in the data message.

The IDMS is mainly responsible for maintaining the mapping relationship of the access identifier and location identifier in the network, and providing the querying service to the access gateway router and other mapping servers.

The authentication center is responsible for recording the information such as the user type, user service grade, etc., and performing validity authentication and authorization to the user when the user accesses. The authentication center supports the two-way authentication between the network and the user.

The radio access network is responsible for providing and maintaining the two-layer link from the user terminal to the AGR; and responsible for wireless resource management in the case of the cell mobile network application scene.

In that framework shown in FIG. 1, the network can be divided into an access network and a backbone network. The access network locates at the edge of backbone network, responsible for the accessing of all terminals, and in the RAN section, all the user terminals use AID to address. The backbone network is responsible for the routing of the terminals accessing through different access networks. The access network and the backbone network do not overlap on the topological relationship. AID is used in the application layer between the communication hosts to identify the opposite end, and the communication between the user terminals can perform with the only need of using the AID of the opposite end.

The access gateway router locates at the boundary point of the backbone network and the access network, interfacing with the access network and the backbone network, responsible for providing the access service for the terminal, maintaining the user connection, forwarding the user data, etc. All the communications between user terminals are forwarded and managed through the access gateway router in the located access network. The data message between the terminals in the service range of the same access gateway router is forwarded to the opposite end directly. The data message between the terminals locating at service ranges of different access gateway routers is forwarded as follows: when the terminal sends out the data message, the corresponding access gateway router carries the RID information (that RID is corresponding to the AID) in the forwarded data message; correspondingly, when the terminal receives the data message, the access gateway router performs the opposite operation, that is, strips the RID information and forwards the data message to the terminal. The mapping server stores the mapping relationship between Identifier and Locator allocated to all accessed user terminals in the network, and analyzes the identifier relationship through the signaling interacting with the access gateway router.

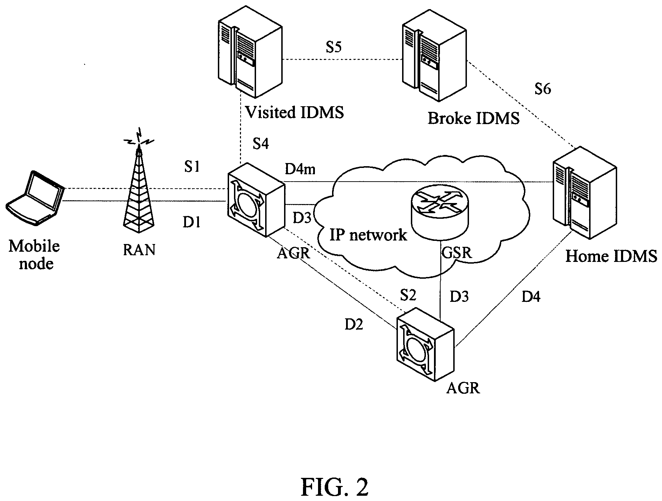

The related interfaces of the network framework of the above network based Identifier and Locator separation framework are shown in FIG. 2. The S1/D1 is the interface between the user terminal and the AGR, S1 is used for the signaling of the user access management, and the D1 is the data forwarding interface. S2 is used for the handover management signaling during the handover between the AGRs, and the D2 is for data forwarding during the handover between the AGRs. D3 is a data forwarding interface between the AGR and the GSR, and the S4/S5/S6 are the signaling interfaces used for inquiring and maintaining the AID-RID mapping relationship. D4m is a data forwarding interface between the AGR and IDMS. when there is no direct coupling relationship between a visited IDMS and a home IDMS, the Broke IDMS forwards the signaling between the visited IDMS and the home IDMS.

The method of handover management realizing mobility support in the above-mentioned network framework is described hereinafter. The CN and the MN establish communication, receive and transmit the data message with each other. In the process of establishing the communication relationship with MN, the AGR where the CN is located can query the mapping relationship between the AID and the RID of the MN from the mapping server IDMS according to the AID carried in the message of the MN, thus obtaining the route location identifier RID of the MN.

After the radio access network detects the mobility of the MN (that is, the location of the MN has changed, moving from the coverage of one AGR to another AGR, and in this case, it needs to initiate a handover flow), the handover flow is triggered. In the handover process, the handover-out gateway AGR and the handover-in gateway AGR establish the forwarding relationship, and in the handover process or after the handover finishes, the handover-out gateway AGR forwards the received data message transmitted towards the MN to the handover-in gateway AGR, and the handover-in gateway AGR forwards to the MN.

The AID-RID mapping relationship of the MN stored in the mapping server IDMS is updated, and the CN is notified of the new AID-RID mapping relationship, and other associated constituent parts are notified in the network.

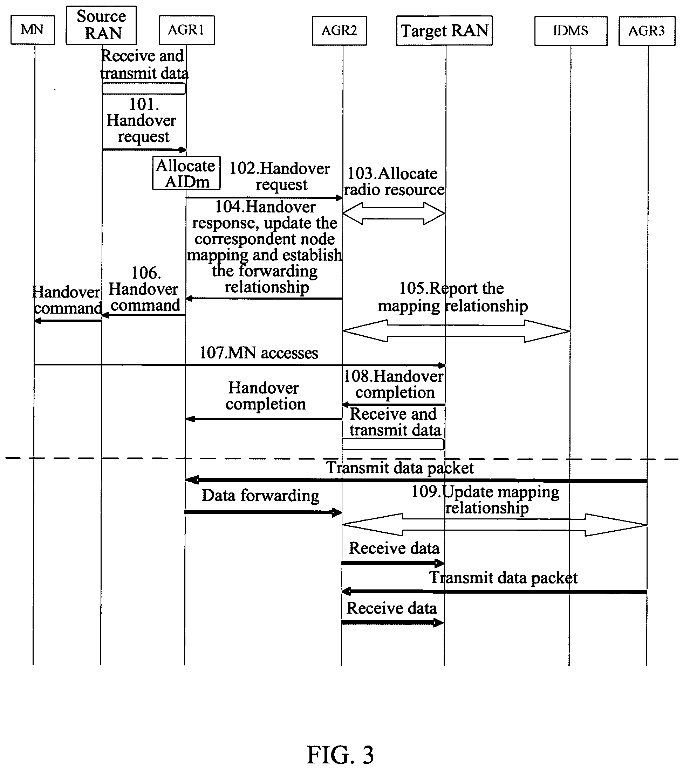

The specific flow is as shown in FIG. 3 and includes the following steps.

In step 101, the source RAN, when determining that the MN needs to perform the handover, transmits a handover request carrying the identifier information, such as AIDm and so on, of the target RAN and the MN to the handover-out gateway AGR1.

The source RAN can perform the handover judgment combining with the distribution situation of the radio resource according to the information, such as strong or weak wireless signal of the MN, system load, etc. The source RAN is the radio access network that the MN accesses currently, and the handover-out gateway is the access gateway router that the MN connects currently.

In step 102, the AGR1, after receiving the handover request message transmitted by the radio access system, finds the handover-in AGR2 according to the identifier information of the target RAN and forwards the handover request message to the AGR2, and the message carries the identifier information of the MN.

In the cell mobile network, the corresponding relationship table of the adjacent RAN and AGR is configured in the AGR with the adjacent relationship in physical locations, and therefore, the AGR1 will store the corresponding relation table entry of the RAN and the AGR2.

In step 103, the AGR2, after receiving the handover request message, allocates a new RID for that user, establishes the AIDm-RIDm mapping relationship of that mobile node in the AGR2, and interacts messages with the target RAN to allocate the radio resource for the MN.

In step 104, the AGR2 transmits a handover response message to the AGR1, interacts the messages with the AGR1 to obtain the mapping relationship AIDc-RIDc of all CNs in data communication with the MN, and establishes the data forwarding relationship with the AGR1.

The operation of establishing the data forwarding relationship here is the content of the related art, of which the typical practice is realized by way of tunnel encapsulation, that is, the AGR1, when receiving the data message transmitted by the MN from the AGR2, strips the tunnel encapsulation of the AGR1-AGR2, and then transmits to the CN; the AGR1, when receiving the data message transmitted towards the MN from the CN, adds the tunnel encapsulation of the AGR1-AGR2 in the header of the message and then transmits to the AGR2, and the AGR2 de-encapsulates and transmits to the MN.

The AGR1, after recording the forwarding relationship with the AGR2, forwards the data message transmitted towards the MN, received during the handover, to the MN through the AGR2; in another example, the AGR1 can also cache the data message transmitted towards the MN first, and after the handover finishes, for example after receiving the handover completion message of the AGR2, then the AGR1 forwards the cached data message to the MN through the AGR2.

Certainly, the data forwarding relationship can also not be established. The AGR1, after receiving the handover response, forwards the data directly to the AGR2 or forwards the data after caching.

In step 105, the AGR2 initiates a mapping update flow to the IDMS to update the AIDm-RIDm mapping relationship of that user terminal stored by the IDMS.

The step can be performed with step 104 at the same time, and the precedence order of the two is not limited here.

In step 106, after receiving the handover response message transmitted by the AGR2, the AGR1 transmits the handover command to the MN through the source RAN.

In step 107, after receiving the handover command, the MN initiates the access request to the target RAN, requests to establish the communication link with the AGR2, and receives and transmits and receives the data message from the communication link.

In that step, after the MN receives the handover command, the communication contact with the source RAN/AGR1 is interrupted, and the MN needs to access the network from the target RAN side.

In step 108, AGR2, after receiving the handover completion message transmitted by the target RAN, forwards to the AGR1.

In step 109, the AGR2, according to the mapping relationship AIDc-RIDc of all CNs in the data communication with the MN obtained from the AGR1, initiates the mapping update relationship request to the access gateway router AGR3 directed by the RIDc, and notifies the access gateway router AGR3 of the CN to update the stored AIDm-RIDm mapping relationship of the MN.

The AGR3, after updating the AIDm-RIDm mapping relationship of the MN according to the received notification, transmits the data that the CN transmitted towards the MN to the AGR2. If the AGR2 does not receive the data packet transmitted by the AGR3 after initiating the update mapping relationship request to the AGR3, and still receives the data transmitted by the AGR1 constantly, it is illustrated that the AGR3 does not receive the update mapping relationship request, and then the AGR2 will re-initiate the update mapping relationship request to the AGR3.

In addition, after the handover finishes, the AGR1 will delete the forwarding relationship between the AGR1 and the AGR2 of the MN, for example, during the handover, the AGR1 can set a message timer for forwarding the data to the AGR2, and the AGR1 will delete the forwarding relationship with the AGR2 after the timer is overtime; and/or the AGR2 transmits a signal for deleting the forwarding relationship to the AGR1 after finishing the process of updating the mapping relationship of the AGR3 of all CNs in communicating with the MN (the embodiment takes the case that the MN only has one correspondent node as an example for description), and the AGR1 deletes the forwarding relationship between the AGR1 and the AGR2 of the MN after receiving that signal.

In the present invention, the handover management of the mobile node in the movement process mainly involves the interaction and processing among the mobile node, the access gateway router and the mapping server to guarantee that the communication between the user terminals which are initiating a communication or communicating in the handover process is performed normally, and meanwhile try to reduce the packet loss rate in the handover process.

In the above-mentioned scheme, the access switch router AGRm needs to store the information of all CNs for each locally accessed MN, and notifies the new Identifier and Locator mapping relationship of the MN to the access switch router AGRc to which the CN belongs according to the stored information.

Therefore, the access switch router is required to have the following functions.
1) The access switch router AGRm can store the records of all CNs communicating with the locally accessed user terminal MN.
2) The access switch router AGRm stores the Identifier and Locator mapping relationship of all CNs and forms the AIDc-RIDc mapping route table of the CN. The data message forwarded in the backbone network as shown in FIG. 1 is generated by way of using the data message to encapsulate the RIDc header or by way of using the RIDc to replace the AIDc, through querying the AIDc-RIDc mapping route table.
3) Due to the performance limitation of the access switch router AGRm, the mapping route table entries that can be stored are limited, and therefore, the AGRm needs to support the aging of the mapping route table entry.

Further, the aging of the mapping route table entry can be performed in the following ways.

The first way, when the mapping route table entry goes beyond the performance limitation of the access switch router AGRm, the access switch router AGRm decides which entry is to be replaced, and replaces it with a new mapping route entry. For example, the mapping route entry not being queried in the maximum duration is replaced, the entry with a minimum number of the querying times is replaced, or the entry with a lower preferential rank is replaced, etc.

The second way, the following steps can be used.
1) The AGRm sets a uniform periodic timer Ti.
2) When the mapping route table entry is established, a timer label TL is stored for each entry, and the initialization TL is the a default integer value set by the AGRm system.
3) The AGRm resets the TL corresponding to a certain mapping route table entry to be the initialization value when querying that mapping route table entry every time.
4) When the Ti timer arrives, the AGRm polls the mapping route table entries, and reduces the TL corresponding to each mapping route table entry by 1. When the TL of a certain mapping route table entry is detected to be 0, the mapping route table entry is deleted.

### Example two

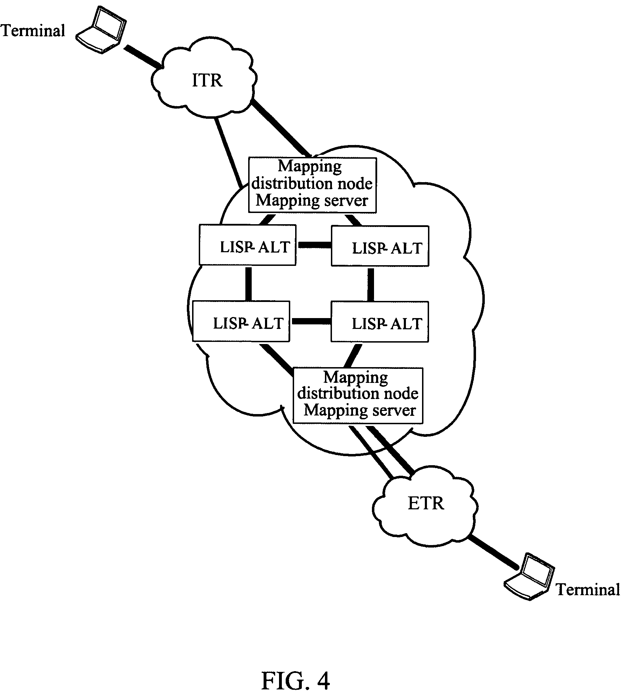

As shown in FIG. 4, the network framework which the present example is based on can be a locator/ID separation protocol (LISP) + alternative logical topology (ALT), wherein, the egress tunnel router (ETR) / ingress tunnel router (ITR) are corresponding to the AGR (that is, the AGR is equal to the function combination of the ETR and ITR) in example one and the mapping distribution node (map-resolver) / mapping server (map-server) are responding to the IDMS in example 1. Wherein, the endpoint identifiers (EID) in the LISP are corresponding to the AID in example 1, and the route address (routing locators, RLOC) is corresponding to the RID in example 1. The specific implementation steps are totally the same as the example 1.

The tunnel routers are introduced in the LISP system, and the terminal encapsulates the LISP when transmitting the data packet and the data packet is de-encapsulated before arriving to the destination. In the process of the end-to-end packet switching between the terminals in two networks, the ITR encapsulates a new LISP header for each packet and the new header is stripped in the ETR. That operation process is corresponding to that in example one, the AGR transmits the data message of the terminal in backbone network after encapsulating Identifier in the data message, and when receiving the data message transmitted towards the terminal, the AGR de-encapsulates and then transmits to the terminal after receiving the data message transmitted to the terminal.

The IP addresses of "the external layer header" in the LISP data packet are RLOCs. The ITR performs the EID-to-RLOC searching to determine the route path to the ETR, and the ETR takes the RLOC as its one address. That operation is corresponding to that in Example one, the AGR encapsulates the RID route information in the data message transmitted by the terminal, and then the data message is routing forwarded to the AGR where the correspondent node directed by the destination RID is located through the GSR.

The ALT, as one topological structure in the Internet, is identified as a plane with special functions by the way defined by the LISP system, which is equal to the IDMS in the backbone network in Example one.

The specific implementation steps of the present example are same as the Example one, which will not go into details here.

### Example three

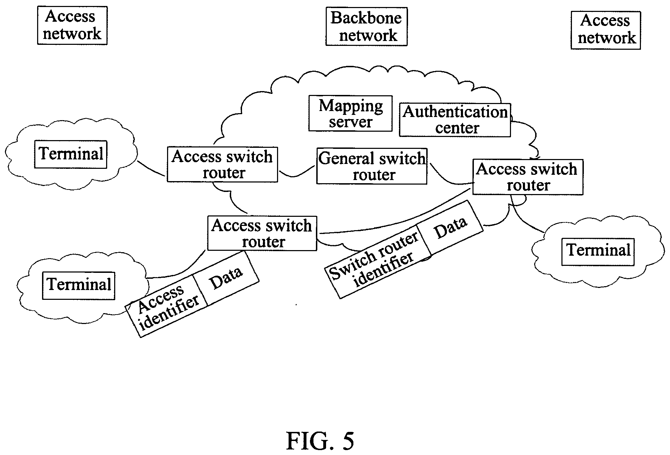

The network framework which the present example is based on can be an integration network, as shown in FIG. 5, wherein, the access router is corresponding to the AGR in Example one. The specific implementation steps of the present example are the same as the Example one, which will not go into details here.

Based on the above method, the present invention further provides a system for handover management of a mobile node, applied to an Identifier and Locator separation framework including a MN, a RAN and an AGR, wherein, the AGR further includes a route location identifier allocating module, a correspondent node information obtaining module and a mapping relationship updating module, wherein:
a current source RAN of the MN is configured to, when determining that the MN needs to initiate a handover, initiate a handover request comprising information of a target RAN to a first access gateway router (AGR1);;
the AGR1 is configured to transmit the handover request to a second access gateway router (AGR2) of the target RAN according to the information of the target RAN in the received handover request;
the AGR2 is configured to, after receiving the handover request, return a handover response;
the target RAN is configured to complete the access of the MN according to the received access request, and transmit a handover completion message to the AGR2;
the MN is configured to, according to the received handover command, initiate the access request to the target RAN through the AGR2, and finish the handover to the target RAN.

Wherein, the AGR further comprises a route location identifier allocating module, a correspondent node information obtaining module and a mapping relationship updating module, wherein,
the route location identifier allocating module is configured to, after receiving the handover request of the MN, allocate a new route location identifier (RID) for the MN and transmit to the mapping relationship updating module;
the correspondent node information obtaining module is configured to, after receiving the handover request, obtain information of all CNs in communication with the MN from the AGR of the source RAN of the MN and transmit to the mapping relationship updating module; after receiving the request for obtaining information of the correspondent node transmitted by the AGR of the target RAN which the MN hands over to, transmit the information of all CNs in communication with the MN to the AGR of the target RAN;
the mapping relationship updating module is configured to, after receiving the new RID of the MN, establish a new Identifier and Locator mapping relationship of the MN, and notify the AGR where the CN is located the new Identifier and Locator mapping relationship of the MN according to the information of the CN.

Wherein, the mapping relationship updating module of the AGR2 is further configured to, after establishing the new Identifier and Locator mapping relationship of the MN, initiate a mapping update request to a mapping server to request to update the Identifier and Locator mapping relationship of the MN.

Wherein, the AGR further comprises a data forwarding module, wherein,
the data forwarding module of the AGR of the target RAN is configured to, after receiving the handover request, establish a forwarding relationship with the AGR of the source RAN, and transmit a data message transmitted towards the MN to the MN after receiving the handover completion message;
the data forwarding module of the AGR of the source RAN is configured to, according to the established forwarding relationship, transmit the received data message transmitted towards the MN to the AGR of the target RAN during the handover or after receiving the handover completion message.

Wherein, the mapping relationship updating module of the AGR of the target RAN is further configured to, after notifying the new Identifier and Locator mapping relationship of the MN to the AGR where the CN is located, transmit a deleting instruction to the AGR of the source RAN;
the mapping relationship updating module of the AGR of the source RAN is further configured to, delete the forwarding relationship according to the deleting instruction, and/or, delete the forwarding relationship in a certain time after establishing the forwarding relationship.

Wherein, the AGR further comprises a timing module and an entry managing module, wherein,
the timing module is configured to set a time cycle of the polling timer, and notify the entry managing module when the time cycle of the polling timer arrives;
the entry managing module is configured to store the Identifier and Locator mapping route table of all CNs in communication with the MN, set a timer label for each entry when establishing the entries of the mapping route table, and an initialization value of the timer label is a set default integer value; when querying a certain entry of the mapping route table every time, reset the timer label corresponding to the entry of the mapping route table to the initialization value; and when receiving the notification of the timing module, poll the entries of the mapping route table, reduce the timer label corresponding to each entry of the mapping route table by 1, and then delete a certain entry of the mapping route table when detecting that the timer label of the entry of the mapping route table is 0.In addition, the example of the present invention also provides an AGR implementing user data management in a handover process of a mobile node, applied to an Identifier and Locator separation framework including a route location identifier allocating module, a correspondent node information obtaining module and a mapping relationship updating module, wherein,
the route location identifier allocating module is configured to, after receiving a handover request of the mobile node (MN), allocate a new route location identifier (RID) to the MN and transmit the new RID to the mapping relationship updating module;
the correspondent node information obtaining module is configured to, after receiving the handover request, obtain information of all correspondent nodes (CNs) in communication with the MN from an access gateway router (AGR) of a source radio access network (RAN) of the MN and transmit to the mapping relationship updating module; after receiving the request for obtaining information of the correspondent node transmitted by the AGR of the target RAN which the MN hands over to, transmit the information of all the CNs in communication with the MN to the AGR of the target RAN;
the mapping relationship updating module is configured to, after receiving the new RID of the MN, establish a new Identifier and Locator mapping relationship of the MN, and notify the AGR where the CN is located of the new Identifier and Locator mapping relationship of the MN according to the information of the CN.

Wherein, the mapping relationship updating module is further configured to, after establishing the new Identifier and Locator mapping relationship of the MN, initiate a mapping update request to a mapping server to request to update the Identifier and Locator mapping relationship of the MN.

Wherein, the AGR further comprises a data forwarding module, wherein,
the data forwarding module of the AGR2 is configured to, after receiving the handover request, establish a forwarding relationship with the AGR1, and transmit a data message transmitted towards the MN to the MN after receiving the handover completion message;
the data forwarding module of the AGR1 is configured to, according to the established forwarding relationship, transmit the received data message transmitted towards the MN to the AGR2 during the handover or after receiving the handover completion message.

Wherein, the mapping relationship updating module of the AGR of the target RAN is further configured to, after notifying the AGR where the CN is located of the new Identifier and Locator mapping relationship of the MN, transmit a deleting instruction to the AGR of the source RAN;
the mapping relationship updating module of the AGR of the source RAN is further configured to, delete the forwarding relationship according to the deleting instruction, and/or, delete the forwarding relationship in a certain time after establishing the forwarding relationship.

Wherein, the AGR further comprises a timing module and an entry managing module, wherein,
the timing module is configured to set a time cycle of a polling timer, and notify the entry managing module when the time cycle of the polling timer arrives;
the entry managing module is configured to store the Identifier and Locator mapping route table of all CNs in communication with the MN, set a timer label for each entry when establishing the entries of the mapping route table, wherein, an initialization value of the timer label is a set default integer value; when querying a certain entry of the mapping route table every time, reset the timer label corresponding to the entry of the mapping route table to the initialization value; and when receiving the notification of the timing module, poll the entries of the mapping route table, reduce the timer label corresponding to each entry of the mapping route table by 1, and delete a certain entry of the mapping route table when detecting that the timer label of the entry of the mapping route table is 0.

### Industrial Applicability

The scheme in the present invention realizes the handover management of the mobility in the Identifier and Locator separation framework based on the network, provides a simple handover management procedure by combining the characteristic of the mobile communication network, provides an optimized user data management method in the handover management procedure, and makes the function distribution and the main procedure of each function entity in the handover management procedure clearly. A method for compatible transition is provided for the current mobile communication cell network, and the related procedure of mobility management in the network based Identifier and Locator separation framework is implemented by network side equipments, and there is no new function requirement for the mobile node and the mobile node can support without changing.

## Claims

1. A method for handover management of a mobile node, MN, for an Identifier and Locator separation framework, when a current source radio access network, RAN, of the MN determines that the MN needs to initiate a handover, the method comprises:
the source RAN initiating (101) a handover request including information of a target RAN to a first access gateway router, AGR1, and the AGR1 transmitting (102) the handover request to a second access gateway router, AGR2, of the target RAN according to the information of the target RAN;
the AGR2, after receiving the handover request, allocating (103) a new route location identifier, RID, for the MN, establishing (103) a new Identifier and Locator mapping relationship of the MN which is a mapping relationship between an AID of the MN and the new RID of the MN;
the AGR2 returning (104) a handover response to the AGR1, obtaining (104) a mapping relationship between the AID and the RID of all correspondent nodes, CNs, in communication with the MN from the AGR1;
after receiving the handover response, the AGR1 transmitting (106) a handover command to the MN through the source RAN;
the MN initiating (107) an access request to the target RAN through the AGR2 according to the received handover command, and finishing the handover to the target RAN; after receiving a handover completion message transmitted by the target RAN, the AGR2 notifying (109) a third access gateway router, AGR3, where the CN is located of the new Identifier and Locator mapping relationship of the MN according to the obtained information of the CN;
wherein the AID is configured for each user, and maintains unchanged all the time in a movement process;
the method further comprising:
the AGR2, after receiving the handover request, establishing (104) a forwarding relationship with the AGR1; and
the AGR1 transmitting a received data message transmitted towards the MN to the AGR2 during the handover, and the AGR2 forwarding the data message to the MN.

2. The method according to claim 1, further comprising:
the AGR2, after establishing the new Identifier and Locator mapping relationship of the MN, initiating (105) a mapping update request to a mapping server to request to update a mapping relationship between the AID and the RID of the MN.

3. The method according to claim 1, wherein
in the step of the AGR2 establishing (104) the forwarding relationship with the AGR1, the AGR2 and the AGR1 establishes the forwarding relationship by the way of tunnel capsulation, to forward the data message.

4. The method according to claim 1, further comprising:
the AGR1 deleting the forwarding relationship in a certain time after establishing the forwarding relationship, and/or, the AGR2, after notifying the AGR where the CN is located of the new Identifier and Locator mapping relationship of the MN , transmitting a deleting instruction to the AGR1, and the AGR1 deleting the forwarding relationship according to the deleting instruction.

5. The method according to claim 1, wherein
the AGR1 stores an Identifier and Locator mapping route table of all the CNs in communication with the MN, and performs an aging process to the mapping route table by the following way:
setting a polling timer;
when establishing entries of the mapping route table, setting a timer label for each entry, and an initialization value of the timer label being a set default integer value;
when querying a certain entry of the mapping route table every time, resetting the timer label corresponding to the entry of the mapping route table to the initialization value;
when a time cycle of the polling timer arrives, polling the mapping route table, reducing the timer label corresponding to each entry of the mapping route table in the mapping route table by 1, and deleting a certain entry of the mapping route table when detecting that the timer label of the entry of the mapping route table is 0.

6. A system for handover management of a mobile node for an Identifier and Locator separation framework, the system comprising a mobile node, MN, a resource radio access network, RAN, a target RAN, a first access gateway router, AGR1, and a second access gateway router, AGR2, wherein
a current source RAN of the MN is configured to, when determining that the MN needs to initiate a handover, initiate a handover request comprising information of a target RAN to the AGR1;
the AGR1 is configured to transmit the handover request to the AGR2 of the target RAN according to the information of the target RAN in the received handover request; after receiving a handover response from the AGR2, transmit a handover command to the MN through the source RAN;
the AGR2 is configured to, after receiving the handover request from the AGR1, return the handover response; the AGR2 comprise a route location identifier allocating module, a correspondent node information obtaining module, a mapping relationship updating module and a data forwarding module, wherein,
the route location identifier allocating module is configured to, after receiving the handover request of the MN, allocate a new route location identifier, RID, for the MN and transmit the new RID to the mapping relationship updating module;
the correspondent node information obtaining module is configured to, after receiving the handover request, obtain information of all Correspondent Nodes, CNs, in communication with the MN from the AGR1 of the source RAN of the MN and transmit to the mapping relationship updating module;
the mapping relationship updating module is configured to, after receiving the new RID of the MN, establish a new Identifier and Locator mapping relationship of the MN which is a mapping relationship between an AID of the MN and the new RID of the MN, and notify a third access gateway router, AGR3, where a Correspondent Node, CN, is located the new Identifier and Locator mapping relationship of the MN according to the information of the CN;
the data forwarding module of the AGR2 of the target RAN is configured to, after receiving the handover request, establish a forwarding relationship with the AGR1 of the source RAN;
the AGR1 also comprises a data forwarding module, the data forwarding module of the AGR1 of the source RAN is configured to, according to an established forwarding relationship with the AGR2, transmit the received data message transmitted towards the MN to the AGR2 of the target RAN during the handover;
the MN is configured to, according to the received handover command, initiate the access request to the target RAN through the AGR2, and finish the handover to the target RAN;
wherein the AID is configured for each user, and maintains unchanged all the time in a movement process.

7. The system according to claim 6, wherein the target RAN is configured to complete the access of the MN according to the received access request, and transmit a handover completion message to the AGR2.

8. The system according to claim 7, wherein
the AGR1 comprise a correspondent node information obtaining module, wherein,
the correspondent node information obtaining module is configured to, after receiving the request for obtaining information of the correspondent node transmitted by the AGR2 of the target RAN which the MN hands over to, transmit a mapping relationship between the AID and the RID of all CNs in communication with the MN to the AGR2 of the target RAN.

9. The system according to claim 8, wherein
the mapping relationship updating module of the AGR2 is further configured to, after establishing the new Identifier and Locator mapping relationship of the MN, initiate a mapping update request to a mapping server to request to update a mapping relationship between the AID and the RID of the MN.

10. The system according to claim 8, wherein
the AGR1 and the AGR2 further comprises a data forwarding module, wherein
the data forwarding module of the AGR2 of the target RAN is also configured to, transmit a data message transmitted towards the MN to the MN after receiving the handover completion message from the target RAN.

11. The system according to claim 10, wherein
the mapping relationship updating module of the AGR2 of the target RAN is further configured to, after notifying the new Identifier and Locator mapping relationship of the MN to the AGR3 where the CN is located, transmit a deleting instruction to the AGR1 of the source RAN;
the AGR1 also comprises a mapping relationship updating module, the mapping relationship updating module of the AGR1 of the source RAN is configured to, delete the forwarding relationship according to the deleting instruction, and/or, delete the forwarding relationship in a certain time after establishing the forwarding relationship.

12. The system according to any one of claims 7 to 11, wherein
the AGR1 further comprises a timing module and an entry managing module, wherein,
the timing module is configured to set a time cycle of the polling timer, and notify the entry managing module when the time cycle of the polling timer arrives;
the entry managing module is configured to store the Identifier and Locator mapping route table of all CNs in communication with the MN, set a timer label for each entry when establishing the entries of the mapping route table, and an initialization value of the timer label is a set default integer value; when querying a certain entry of the mapping route table every time, reset the timer label corresponding to the entry of the mapping route table to the initialization value; and when receiving the notification of the timing module, poll the entries of the mapping route table, reduce the timer label corresponding to each entry of the mapping route table by 1, and then delete a certain entry of the mapping route table when detecting that the timer label of the entry of the mapping route table is 0.

13. An access gateway router, AGR, of user data management in a handover process of a mobile node, MN, for an Identifier and Locator separation framework, comprising:
the AGR is configured to receive a handover request including information of a target RAN from a source RAN, and transmit the handover request to a second access gateway router, AGR2, of the target RAN according to the information of the target RAN;
the AGR comprises a route location identifier allocating module, a correspondent node information obtaining module, a mapping relationship updating module and a data forwarding module, wherein
the route location identifier allocating module is configured to, after receiving the handover request from a first access gateway router, AGR1, of the source radio access network, RAN, of the MN, allocate a new route location identifier, RID, to the MN and transmit the new RID to the mapping relationship updating module;
the correspondent node information obtaining module is configured to, after receiving the handover request, obtain information of all correspondent nodes, CNs, in communication with the MN from the AGR1 and transmit the information of all CNs in communication with the MN to the mapping relationship updating module; after receiving the request for obtaining information of the correspondent node transmitted by the AGR2 of a target RAN which the MN hands over to, transmit a mapping relationship between the AID and the RID of all the CNs in communication with the MN to the AGR2 of the target RAN;
the mapping relationship updating module is configured to, after receiving the new RID of the MN, establish a new Identifier and Locator mapping relationship of the MN which is a mapping relationship between an AID of the MN and the new RID of the MN, and notify a third access gateway router, AGR3, where the CN is located of the new Identifier and Locator mapping relationship of the MN according to the information of the CN;
the data forwarding module is configured to, after receiving the handover request, establish a forwarding relationship with the AGR1; according to an established forwarding relationship with the AGR2, transmit the received data message transmitted towards the MN to the AGR2, of the RAN of the MN during the handover;
the AGR is also configured to after receiving the handover request from the AGR1, return the handover response; after receiving a handover response from the AGR2, transmit a handover command to the MN through the source RAN;
wherein the AID is configured for each user, and maintains unchanged all the time in a movement process.

14. The AGR according to claim 13, wherein
the mapping relationship updating module is further configured to, after establishing the new Identifier and Locator mapping relationship of the MN, initiate a mapping update request to a mapping server to request to update a mapping relationship between the AID and the RID of the MN.

15. The AGR according to claim 13, wherein
the data forwarding module is configured to, transmit a data message transmitted towards the MN to the MN after receiving a handover completion message from the target RAN.

16. The AGR according to claim 13, 14 or 15, wherein
the mapping relationship updating module is further configured to, after notifying the AGR3 where the CN is located of the new Identifier and Locator mapping relationship of the MN, transmit a deleting instruction to the AGR1 of the source RAN;
the mapping relationship updating module is further configured to, delete the forwarding relationship according to the deleting instruction, and/or, delete the forwarding relationship in a certain time after establishing the forwarding relationship.

17. The AGR according to claim 16, wherein
the AGR further comprises a timing module and an entry managing module, wherein,
the timing module is configured to set a time cycle of a polling timer, and notify the entry managing module when the time cycle of the polling timer arrives;
the entry managing module is configured to store the Identifier and Locator mapping route table of all CNs in communication with the MN, set a timer label for each entry when establishing the entries of the mapping route table, wherein, an initialization value of the timer label is a set default integer value; when querying a certain entry of the mapping route table every time, reset the timer label corresponding to the entry of the mapping route table to the initialization value; and when receiving the notification of the timing module, poll the entries of the mapping route table, reduce the timer label corresponding to each entry of the mapping route table by 1, and delete a certain entry of the mapping route table when detecting that the timer label of the entry of the mapping route table is 0.

## Patentansprüche

1. Verfahren zur Übergabeverwaltung eines mobilen Knotens MN für einen Kennung-Locator-Trennungsrahmen, wenn ein aktuelles Quellfunkzugangsnetz RAN des MN feststellt, dass der MN eine Übergabe einleiten muss, wobei das Verfahren umfasst:
Einleiten (101) einer Übergabeanfrage, umfassend Informationen eines Ziel-RAN an einen ersten Gateway-Router AGR1 durch das Quell-RAN und Übertragen (102) der Übergabeanfrage durch den AGR1 an einen zweiten Gateway-Router AGR2 des Ziel-Ran gemäß den Informationen des Ziel-RAN,
Zuteilen (103) einer neuen Routenortsbestimmung RID für den MN durch den AGR2, Herstellen (103) eines neuen Kennung-Locator-Abbildungsverhältnisses des MN, bei dem es sich um ein Abbildungsverhältnis zwischen einer AID des MN und der neuen RID des MN handelt,
Zurückgeben (104) einer Übergabeantwort durch den AGR2 an den AGR1, Erhalten (104) eines Abbildungsverhältnisses zwischen AID und RID aller korrespondierenden Knoten CN, die mit dem MN kommunizieren, beim AGR1,
nach dem Empfang der Übergabeantwort: Übertragen (106) eines Übergabebefehls durch den AGR1 an den MN über das Quell-RAN,
Einleiten (107) einer Zugriffsanfrage an das Ziel-RAN über den AGR2 durch den MN gemäß dem empfangenen Übergabebefehl und Abschließen der Übergabe an das Ziel-RAN, nach dem Empfang einer vom Ziel-RAN abgesendeten Übergabe-Abschlussmitteilung:
Mitteilen (109) des neuen Kennung-Locator-Abbildungsverhältnisses des MN durch den AGR2 an einen dritten Gateway-Router AGR3, wo sich der CN befindet, gemäß den erhaltenen Informationen des CN,
wobei die AID für jeden Nutzer konfiguriert ist und bei einem Bewegungsprozess zu jedem Zeitpunkt (sic!) unverändert hält,
wobei das Verfahren ferner umfasst:
nach dem Empfang der Übergabeanfrage: Herstellen (104) eines Weiterleitungsverhältnisses mit dem AGR1 durch den AGR2,
Übertragen einer in Richtung des MN gesendeten empfangenen Datennachricht durch den AGR1 an den AGR2 bei der Übergabe und Weiterleiten der Datennachricht an den MN durch den AGR2.

2. Verfahren nach Anspruch 1, ferner umfassend:
nach dem Herstellen des neuen Kennung-Locator-Abbildungsverhältnisses des MN: Einleiten (105) einer Abbildungsaktualisierungsanfrage durch den AGR2, um zur Aktualisierung eines Abbildungsverhältnisses zwischen AID und RID des MN aufzufordern.

3. Verfahren nach Anspruch 1, wobei:
im Schritt des Herstellens (104) des Weiterleitungsverhältnisses mit dem AGR1 durch den AGR2: Herstellen des Weiterleitungsverhältnisses durch AGR2 und AGR2 im Wege der Tunnelverkapselung, um die Datennachricht weiterzuleiten.

4. Verfahren nach Anspruch 1, ferner umfassend:
Löschen des Weiterleitungsverhältnisses durch den AGR1 innerhalb bestimmter Zeit nach dem Herstellen des Weiterleitungsverhältnisses und/oder Übertragen eines Löschbefehls an den AGR1 durch den AGR2, nachdem das neue Kennung-Locator-Abbildungsverhältnis des MN dem AGR, wo sich der CN befindet, mitgeteilt worden ist, und Löschen des Weiterleitungsverhältnisses gemäß dem Löschbefehl durch den AGR1.

5. Verfahren nach Anspruch 1, wobei:
der AGR1 eine Streckendabelle der Kennung-Locator-Abbildung aller mit dem MN kommunizierenden CNs speichert und einen Alterungsprozess an der Streckentabelle auf folgende Weise durchführt:
Einstellen eines Abfrage-Timers,
beim Herstellen von Einträgen der Abbildungs-Streckentabelle: Festlegen einer Timer-Markierung für jeden Eintrag und einen Initialisierungswert der Timer-Markierung, bei dem es sich um einen standardmäßig eingestellten Ganzzahlenwert handelt,
Zurücksetzen der Timer-Markierung, die dem Eintrag der Streckentabelle entspricht, zum Initialisierungswert bei jedem Abfragen eines bestimmten Eintrags der Streckentabelle,
wenn ein Zeitzyklus des Abfrage-Timers erreicht wird: Abfragen der Streckentabelle, Reduzieren der Timer-Markierung, die jedem Eintrag der Streckentabelle in der Streckentabelle entspricht, um 1 und Löschen eines bestimmten Eintrags der Streckentabelle, wenn erkannt wird, dass die Timer-Markierung des Eintrags der Streckentabelle gleich 0 ist.

6. System zur Übergabeverwaltung eines mobilen Knotens für einen Kennung-Locator-Trennrahmen, wobei das System umfasst: einen mobilen Knoten MN, ein Ressourcen-Funkzugangsnetz RAN, ein Ziel-RAN, einen ersten Gateway-Router AGR1 und einen zweiten Gateway-Router AGR2, wobei:
ein aktuelles Quell-RAN des MN derart konfiguriert ist, dass es, wenn es feststellt, dass der MN eine Übergabe einleiten muss, eine Übergabeanfrage, die Informationen eines Ziel-RAN, an den AGR1 einleitet,
der AGR1 derart konfiguriert ist, dass er die Übergabeanfrage dem AGR2 des Ziel-RAN gemäß den Informationen des Ziel-RAN in der empfangenen Übergabeanfrage überträgt, nach dem Empfang der Übergabeantwort dem MN einen Übergabebefehl über das Quell-RAN übeträgt,
der AGR2 derart konfiguriert ist, dass er nach dem Empfang der Übergabeanfrage vom AGR1 die Übergabeantwort zurückgibt, der AGR2 ein Routenortsbestimmungs-Zuteilungsmodul, ein CN-Informationsgewinnungsmodul, ein Abbildungsverhältnis-Aktualisierungsmodul und ein Datenweiterleitungsmodul umfasst, wobei
das Zuteilungsmodul derart konfiguriert ist, dass es nach dem Empfang der Übergabeanfrage des MN dem MN eine neue Routenortsbestimmung RID zuteilt und die neue RID dem Aktualisierungsmodul überträgt,
das Informationsgewinnungsmodul derart konfiguriert ist, dass es nach dem Empfang der Übergabeanfrage Informationen aller korrespondierenden Knoten CNs, die mit dem MN kommunizieren, vom AGR1 des Quell-RAN des MN erhält und dem Aktualisierungsmodul überträgt,
das Aktualisierungsmodul derart konfiguriert ist, dass es nach dem Empfang der neuen RID des MN ein neues Kennung-Locator-Abbildungsverhältnis des MN herstellt, bei dem es sich um ein Abbildungsverhältnis zwischen einer AID des MN und der neuen RID des MN handelt, und einem dritten Gateway-Router AGR3, wo sich ein korrespondierender Knoten CN befindet, das neue Kennung-Locator-Abbildungsverhältnis des MN gemäß den Informationen des CN mitteilt,
das Weiterleitungsmodul des AGR2 des Ziel-RAN derart konfiguriert ist, dass es nach dem Empfang der Übergabeanfrage ein Weiterleitungsverhältnis mit dem AGR1 des Quell-RAN herstellt,
wobei der AGR1 ferner ein Datenweiterletiungsmodul umfasst, wobei das Weiterleitungsmodul des AGR1 des Quell-RAN derart konfiguriert ist, dass es gemäß einem hergestellten Weiterleitungsverhältnis mit dem AGR2 die dem MN übertragene, empfangene Datennachricht an den AGR2 des Ziel-RAN bei der Übergabe sendet,
wobei der MN derart konfiguriert ist, dass er gemäß dem empfangenen Übergabebefehl eine Zugriffsanfrage an das Ziel-RAN über den AGR2 weiterleitet und die Übergabe an das Ziel-RAN abschließt,
wobei die AID für jeden Nutzer konfiguriert ist und bei einem Bewegungsprozess zu jedem Zeitpunkt unverändert hält.

7. System nach Anspruch 6, wobei das Ziel-RAN derart konfiguriert ist, dass es den Zugriff des MN gemäß der empfangenen Zugriffsanforderung abschließt und eine Übergabeabschlussmitteilung dem AGR2 überträgt.

8. System nach Anspruch 7, wobei:
der AGR1 ein CN-Informationsgewinnungsmodul umfasst, wobei,
das Informationsgewinnungsmodul derart konfiguriert ist, dass es nach dem Empfang der vom AGR2 des Ziel-RAN, an das der MN die Übergabe bewirkt, gesendeten CN-Informationsanfrage ein Abbildungsverhältnis zwischen AID und RID aller mit dem MN kommunizierenden CNs an den AGR2 des Ziel-RAN überträgt.

9. System nach Anspruch 8, wobei:
das Aktualisierungsmodul des AGR2 ferner derart konfiguriert ist, dass es nach der Herstellung des neuen Kennung-Locator-Abbildungsverhältnisses des MN eine Abbildungsaktualisierungsanfrage an einen Abbildungsserver einleitet, um diesen zur Aktualisierung eines Abbildungsverhältnisses zwischen AID und RID des MN aufzufordern.

10. System nach Anspruch 8, wobei:
der AGR1 und der AGR2 ferner ein Datenweiterleitungsmodul umfassen, wobei
das Weiterleitungsmodul des AGR2 des Ziel-RAN auch derart konfiguriert ist, dass es nach dem Empfang der Übergabeabschlussnachricht vom Ziel-RAN eine an den MN gerichtete Datennachricht an den MN sendet.

11. System nach Anspruch 10, wobei:
das Aktualisierungsmodul des AGR2 des Ziel-RAN ferner derart konfiguriert ist, dass es nach der Mitteilung des neuen Kennung-Locator-Abbildungsverhältnisses des MN an den AGR3, wo sich der CN befindet, einen Löschbefehl dem AGR1 des Quell-RAN überträgt,
wobei der AGR1 ferner ein Abbildungsverhältnis-Aktualisierungsmodul umfasst, wobei das Aktualisierungsmodul des AGR1 des Quell-RAN derart konfiguriert ist, dass es gemäß dem Löschbefehl das Weiterleitungsverhältnis löscht und/oder innerhalb bestimmter Zeit nach der Herstellung des Weiterleitungsverhältnisses das Weiterleitungsverhältnis löscht.

12. System nach einem der Ansprüche 7 - 11, wobei
der AGR1 ferner ein Zeitgebermodul und ein Eintragsverwaltungsmodul umfasst, wobei
das Zeitgebermodul derart konfiguriert ist, dass es einen Zeitzyklus des Abfrage-Timers eintstellt und das Eintragsverwaltungsmodul benachrichtigt, wenn der Zeitzyklus des Abfrage-Timers erreicht ist,
das Eintragsverwaltungsmodul derart konfiguriert ist, dass es die Streckentabelle aller mit dem MN kommunizierenden CNs speichert, bei der Erstellung der Einträge der Streckentabelle eine Timer-Markierung für jeden Eintrag einstellt und ein Initialisierungswert der Zeit-Markierung ein festgelegter standardmäßiger Ganzzahlenwert ist, bei jedem Abfragen eines bestimmten Eintrags der Streckentabelle die Timer-Markierung, die dem Eintrag der Streckentabelle entspricht, zum Initialisierungswert zurücksetzt, und bei Empfang der Mitteilung des Zeitgebermoduls die Einträge der Streckentabelle abfragt, die Timer-Markierung, die jedem Eintrag der Streckentabelle entspricht, um 1 reduziert und einen bestimmte Eintrags aus der Streckentabelle löscht, wenn erkannt wird, dass die Timer-Markierung des Eintrags der Streckentabelle gleich 0 ist.

13. Gateway-Router AGR zur Nutzerdatenverwaltung bei einem Übergabeprozess eines mobilen Knotens MN für einen Kennung-Locator-Trennrahmen, umfassend:
der AGR ist derart konfiguriert, dass er eine Übergabeanfrage, die Informationen eines Ziel-RAN von einem Quell-RAN empfängt und die Übergabeanfrage einem zweiten Gateway-Router AGR2 des Ziel-RAN gemäß den Informationen des Ziel-RAN überträgt,
der AGR2 umfasst ein Routenortsbestimmungs-Zuteilungsmodul, ein CN-Informationsgewinnungsmodul, ein Abbildungsverhältnis-Aktualisierungsmodul und ein Datenweiterleitungsmodul, wobei
das Zuteilungsmodul derart konfiguriert ist, dass es nach dem Empfang der Übergabeanfrage von einem ersten Gateway-Router AGR1 des Quell-RAN des MN dem MN eine neue Routenortsbestimmung RID zuteilt und die neue RID dem Aktualisierungsmodul überträgt,
das Informationsgewinnungsmodul derart konfiguriert ist, dass es nach dem Empfang der Übergabeanfrage Informationen aller korrespondierenden Knoten CNs, die mit dem MN kommunizieren, vom AGR1 erhält und dem Aktualisierungsmodul überträgt,
nach dem Empfang der vom AGR2 des Ziel-RAN, an das der MN die Übergabe bewirkt, gesendeten CN-Informationsanfrage ein Abbildungsverhältnis zwischen AID und RID aller mit dem MN kommunizierenden CNs an den AGR2 des Ziel-RAN überträgt,
das Aktualisierungsmodul derart konfiguriert ist, dass es nach dem Empfang der neuen RID des MN ein neues Kennung-Locator-Abbildungsverhältnis des MN herstellt, bei dem es sich um ein Abbildungsverhältnis zwischen einer AID des MN und der neuen RID des MN handelt, und einem dritten Gateway-Router AGR3, wo sich der CN befindet, das neue Kennung-Locator-Abbildungsverhältnis des MN gemäß den Informationen des CN mitteilt,
das Weiterleitungsmodul derart konfiguriert ist, dass es nach dem Empfang der Übergabeanfrage ein Weiterleitungsverhältnis mit dem AGR1 gemäß einem hergestellten Weiterleitungsverhältnis mit dem AGR2 die an den MN gerichtete empfangene Datennachricht dem AGR2 des RAN des MN bei der Übergabe überträgt,
der AGR2 ist ferner derart konfiguriert, dass er nach dem Empfang der Übergabeanfrage vom AGR1 die Übergabeantwort zurückgibt und nach dem Empfang einer Übergabeangwort vom AGR2 einen Übergabebefehl durch das Quell-RAN an den MN überträgt,
wobei die AID für jeden Nutzer konfiguriert ist und bei einem Bewegungsprozess zu jedem Zeitpunkt unverändert hält.

14. AGR nach Anspruch 13, wobei:
das Aktualisierungsmodul ferner derart konfiguriert ist, dass es nach der Herstellung des neuen Kennung-Locator-Abbildungsverhältnisses des MN eine Abbildungsaktualisierungsanfrage an einen Abbildungsserver einleitet, um diesen zur Aktualisierung eines Abbildungsverhältnisses zwischen AID und RID des MN aufzufordern.

15. AGR nach Anspruch 13, wobei:
das Weiterleitungsmodul derart konfiguriert ist, dass es nach dem Empfang einer Übergabeabschlussmitteilung vom Ziel-RAN eine an den MN gerichtete Datennachricht an den MN überträgt.

16. AGR nach Anspruch 13, 14 oder 15 wobei:
das Aktualisierungsmodul ferner derart konfiguriert ist, dass es nach der Mitteilung des neuen Kennung-Locator-Abbildungsverhältnisses des MN an den AGR3, wo sich der CN befindet, einen Löschbefehl dem AGR1 des Quell-RAN überträgt,
das Aktualisierungsmodul ferner derart konfiguriert ist, dass es gemäß dem Löschbefehl das Weiterleitungsverhältnis löscht und/oder das Weiterleitungsverhältnis innerhalb bestimmter Zeit nach der Herstellung des Weiterleitungsverhältnisses löscht.

17. AGR nach Anspruch 16, wobei:
der AGR ferner ein Zeitgebermodul und ein Eintragsverwaltungsmodul umfasst, wobei
das Zeitgebermodul derart konfiguriert ist, dass es einen Zeitzyklus eines Abfrage-Timers eintstellt und das Eintragsverwaltungsmodul benachrichtigt, wenn der Zeitzyklus des Abfrage-Timers erreicht ist,
das Eintragsverwaltungsmodul derart konfiguriert ist, dass es die Streckentabelle aller mit dem MN kommunizierenden CNs speichert, bei der Erstellung der Einträge der Streckentabelle eine Timer-Markierung für jeden Eintrag einstellt, wobei ein Initialisierungswert der Zeit-Markierung ein festgelegter standardmäßiger Ganzzahlenwert ist, bei jedem Abfragen eines bestimmten Eintrags der Streckentabelle die Timer-Markierung, die dem Eintrag der Streckentabelle entspricht, zum Initialisierungswert zurücksetzt, und bei Empfang der Mitteilung des Zeitgebermoduls die Einträge der Streckentabelle abfragt, die Timer-Markierung, die jedem Eintrag der Streckentabelle entspricht, um 1 reduziert und einen bestimmte Eintrags aus der Streckentabelle löscht, wenn erkannt wird, dass die Timer-Markierung des Eintrags der Streckentabelle gleich 0 ist.

## Revendications

1. Procédé pour la gestion de transfert d'un noeud mobile, MN, pour un framework de séparation d'identifiant et de localisateur, lorsqu'un réseau d'accès radio, RAN, source actuel du MN détermine que le MN doit initier un transfert, ce procédé comprenant :
l'initiation (101), par le RAN source, d'une requête de transfert comprenant des informations d'un RAN cible pour un premier routeur de passerelle d'accès AGR1 et la transmission (102), par l'AGR1, de la requête de transfert à un deuxième routeur de passerelle d'accès, AGR2, du RAN cible selon les informations du RAN cible :
l'allocation (103), par l'AGR2, après la réception de la requête de transfert, d'un nouvel identifiant d'itinéraire, RID, pour le MN, l'établissement (103) d'une nouvelle relation de mappage d'identifiant et de localisateur du MN qui mappe une relation entre un AID du MN et le nouveau RID du MN ;
le retour (104), par l'AGR2, d'une réponse de transfert à l'AGR1, l'obtention (104) d'une relation de mappage entre l'AID et le RID de tous les noeuds correspondants, CN, en communication avec le MN, en provenance de l'AGR1 ;
après la réception de la réponse de transfert, la transmission (106), par l'AGR1, d'une commande de transfert au MN par l'intermédiaire du RAN source ;
l'initiation (107), par le MN, d'une requête d'accès au RAN cible par l'intermédiaire de l'AGR2 selon la commande transfert reçue et finition du transfert au RAN cible ; après la réception d'un message de réalisation de transfert transmis par le RAN cible, la notification (109), par l'AGR2, d'un troisième routeur de passerelle d'accès, AGR3, où se trouve le CN, de la nouvelle relation de mappage d'identifiant et de localisateur du MN selon les informations obtenues du CN ;
l'AID étant configuré pour chaque utilisateur et restant inchangé tout le temps dans un processus de mouvement ;
ce procédé comprenant en outre :
l'établissement (104), par l'AGR2, après la réception de la requête de transfert, d'une relation de réacheminement avec l'AGR1 ; et
la transmission par l'AGR1 d'un message de données reçu transmis en direction du MN vers l'AGR2 pendant le transfert et le réacheminement, par l'AGR2, du message de données vers le MN.

2. Procédé selon la revendication 1, comprenant en outre :
l'initiation (105), par l'AGR2, après l'établissement de la nouvelle relation de mappage entre l'identifiant et le localisateur du MN, d'une requête de mise à jour de mappage à un serveur de mappage afin de demander une mise à jour d'une relation de mappage entre l'AID et le RID du MN.

3. Procédé selon la revendication 1, dans lequel
dans l'étape de l'établissement (104), par l'AGR2, de la relation de réacheminement avec l'AGR1, l'AGR2 et l'AGR1 établissent la relation de réacheminement au moyen d'une encapsulation de tunnel pour réacheminer le message de données.

4. Procédé selon la revendication 1, comprenant en outre :
la suppression par l'AGR1, de la relation de réacheminement dans un temps déterminé après l'établissement de la relation de réacheminement et/ou la transmission, par l'AGR2, après la notification à l'AGR où se trouve du CN de la nouvelle relation de mappage entre l'identifiant et le localisateur du MN, d'une instruction de suppression à l'AGR1 et la suppression, par l'AGR1, de la relation de réacheminement selon l'instruction de suppression.

5. Procédé selon la revendication 1, dans lequel
l'AGR1 stocke une table d'itinéraire de mappage d'identifiant et de localisateur de tous les CN en communication avec le MN et effectue un processus de maturation sur la table d'itinéraire de mappage de la manière suivante :
réglage d'un timer de sondage ;
lors de l'établissement d'entrées de la table d'itinéraires de mappage, le réglage d'une étiquette de timer pour chaque entrée, et une valeur d'initialisation de l'étiquette de timer étant une valeur entière réglée par défaut ;
lors de la recherche d'une entrée déterminée de la table d'itinéraires de mappage, la réinitialisation à chaque fois de l'étiquette de timer correspondant à l'entrée de la table d'itinéraires de mappage à la valeur d'initialisation ;
lorsqu'un cycle du timer de sondage arrive à terme, sondage de la table d'itinéraires de mappage, réduction de l'étiquette de timer correspondant à chaque entrée de la table d'itinéraires de mappage dans la table d'itinéraires de mappage de 1 et suppression d'une entrée déterminée de la table d'itinéraires de mappage lorsqu'il est détecté que l'étiquette de timer de l'entrée de la table d'itinéraires de mappage est égale à 0.

6. Système de gestion de transfert d'un noeud mobile, MN, pour un framework de séparation d'identifiant et de localisateur, ce système comprenant un noeud mobile, MN, un réseau d'accès radio ressource RAN, un RAN cible, un premier routeur de passerelle d'accès, AGR1 et un deuxième routeur de passerelle d'accès, AGR2,
un RAN source actuel du MN étant conçu pour initier, lors de la détermination que le MN doit initier un transfert, une requête de transfert comprenant des informations d'un RAN cible à l'AGR1 ;
l'AGR1 étant conçu pour transmettre la requête de transfert à l'AGR2 du RAN cible selon les informations du RAN cible dans la requête de transfert reçue ; après la réception d'une réponse de transfert en provenance de l'AGR2, pour transmettre une commande de transfert au MN par l'intermédiaire du RAN source ;
l'AGR2 étant conçu pour retourner, après la réception de la requête de transfert en provenance de l'AGR1, la réponse de transfert; l'AGR2 comprenant un module d'allocation d'identifiant de localisation d'itinéraire, un module d'obtention d'informations de noeud correspondant, un module de mise à jour de relation de mappage et un module de réacheminement de données,
le module d'allocation d'identifiant de localisation d'itinéraire étant conçu pour allouer, après la réception de la requête de transfert du MN, un nouvel identifiant de localisation d'itinéraire, RID, pour le MN et pour transmettre le nouveau RID au module de mise à jour de relation de mappage ;
le module d'obtention d'informations de noeud correspondant étant conçu pour obtenir, après la réception de la requête de transfert, des informations de tous les noeuds correspondants, CN, en communication avec le MN, en provenance de l'AGR du RAN source du MN et pour les transmettre au module de mise à jour de la relation de mappage ;
le module de mise à jour de relation de mappage étant conçu pour établir, après la réception du nouveau RID du MN, une nouvelle relation de mappage d'identifiant et de localisateur du MN qui est une relation de mappage entre un AID du MN et le nouveau RID du MN, et pour notifier à un troisième routeur de passerelle d'accès, AGR3, où se trouve un noeud correspondant, CN, la nouvelle relation de mappage d'identifiant et de localisateur du MN selon les informations du CN ;
le module de réacheminement de données de l'AGR2 du RAN cible étant conçu pour établir, après la réception de la requête de transfert, une relation de réacheminement avec l'AGR1 du RAN source ;
l'AGR1 comprenant également un module de réacheminement de données, le module de réacheminement de connées de l'AGR1 du RAN source étant conçu pour transmettre, selon une relation de réacheminement établie avec l'AGR2, le message de données reçu transmis en direction du MN vers l'AGR2 du RAN cible pendant le transfert ;
le MN étant conçu pour initier, selon la commande de transfert reçue, la requête d'accès au RAN cible par l'intermédiaire de l'AGR2 et pour terminer le transfert vers le RAN cible ;
l'AID étant configuré pour chaque utilisateur et restant inchangé tout le temps dans un processus de mouvement.

7. Système selon la revendication 6, dans lequel le RAN cible est conçu pour terminer l'accès du MN selon la requête d'accès reçue et pour transmettre un message de fin de transfert à l'AGR2.

8. Système selon la revendication 7, dans lequel
l'AGR1 comprend un module d'obtention d'informations de noeud correspondant,
le module d'obtention d'informations de noeud correspondant étant conçue pour transmettre, après la réception de la requête pour l'obtention d'informations du noeud correspondant transmise par l'AGR2 du RAN cible vers lequel le MN effectue le transfert, d'une relation de mappage entre l'AID et le RID de tous les CN en communication avec le MN à l'AGR2 du RAN cible.

9. Système selon la revendication 8, dans lequel
le module de mise à jour de relation de mappage de l'AGR2 est en coutre conçu pour initier, après l'établissement de la nouvelle relation de mappage d'identifiant et de localisateur du MN, une requête de mise à jour de mappage à un serveur de mappage afind e demander une mise à jour d'une relation de mappage entre l'AID et le RID du MN.

10. Système selon la revendication 8, dans lequel
l'AGR1 et l'AGR2 comprennent en outre un module de réacheminement de données,
le module de réacheminement de données de l'AGR2 du RAN cible étant également conçu pour transmettre un message de données transmis en direction du MN vers le MN après le message de fin de transfert en provenance du RAN cible.

11. Système selon la revendication 10, dans lequel
le module de mise à jour de relation de mappage de l'AGR2 du RAN cible est en outre conçu pour transmettre, après la notification de la nouvelle relation de mappage d'identifiant et de localisateur du MN à l'AGR3 où se trouve le CN, une instruction de suppression à l'AGR1 du RAN source ;
l'AGR1 comprend également un module de mise à jour de relation de mappage, le module de mise à jour de relation de mappage de l'AGR1 du RAN source étant conçu pour supprimer la relation de réacheminement selon l'instruction de suppression et/ou supprimer la relation de réacheminement dans un temps déterminé après l'établissement de la relation de réacheminement.

12. Système selon l'une des revendications 7 à 11, dans lequel
l'AGR1 comprend en outre un module de minutage et un module de gestion d'entrée,
le module de minutage étant conçu pour régler un cycle temporal du timer de sondage et notifier au module de gestion d'entrée quand le cycle temporel du timer de sondage arrive à terme ;
le module de gestion d'entrée étant conçu pour stocker la table d'itinéraires de mappage d'identifiant et de localisateur de tous els CN en communication avec le MN, régler une étiquette de timer pour chaque entrée lors de l'établissement des entrées de la table d'itinéraires de mappage et une valeur d'initialisation de l'étiquette de timer étant une valeur entière réglée par défaut ; lors de la recherche d'une entrée déterminée de la table d'itinéraires de mappage, pour réinitialiser, à chaque fois, de l'étiquette de timer correspondant à l'entrée de la table d'itinéraires de mappage à la valeur d'initialisation ; et, lors de la réception de la notification du module de minutage, pour sonder les entrées de la table d'itinéraires de mappage, réduire l'étiquette de timer correspondant à chaque entrée de la table d'itinéraires de mappage de 1 puis supprimer une entrée déterminée de la table d'itinéraires de mappage lorsqu'il est détecté que l'étiquette de timer de l'entrée de la table d'itinéraires de mappage est égale à 0.

13. Routeur de passerelle d'accès AGR de gestion de données d'utilisateurs dans un processus de transfert d'un noeud mobile, MN pour un framework de séparation d'identifiant et de localisateur, comprenant :
l'AGR est conçu pour recevoir une requête de transfert comprenant des informations d'un RAN cible en provenance d'un RAN source et pour transmettre la requête de transfert à un deuxième routeur de passerelle d'accès, AGR2 du RAN cible selon les informations du RAN cible ;
l'AGR comprend un module d'allocation d'identifiant de localisation d'itinéraire, un module d'obtention d'informations de noeud correspondant, un module de mise à jour de relation de mappage et un module de réacheminement de données,
le module d'allocation d'identifiant de localisation d'itinéraire étant conçu pour allouer, après la réception de la requête de transfert en provenance d'un premier routeur de passerelle d'accès, AGR1, du réseau d'accès radio, RAN, source du MN, un nouvel identifiant de localisation d'itinéraire, RID, au MN et pour transmettre le nouveau RID au module de mise à jour de relation de mappage ;
le module d'obtention d'informations de noeud correspondant étant pour obtenir, après la réception de la requête de transfert, les informations de tous les noeuds correspondants, CN, en communication avec le MN en provenance de l'AGR1 et pour transmettre les informations de tous les CN en communication avec le MN au module de mise à jour de relation de mappage ; pour transmettre, après la réception de la requête pour l'obtention d'informations du noeud correspondant transmise par l'AGR2 d'un RAN cible vers lequel le MN effectue le transfert, une relation de mappage entre l'AID et le RID de tous les CN en communication avec le MN à l'AGR2 du RAN cible ;
le module de mise à jour de relation de mappage étant conçu pour établir, après la réception du nouveau RID du MN, une nouvelle relation de mappage d'identifiant et de localisateur du MN qui est une relation de mappage entre un AID du MN et le nouveau RID du MN, et pour notifier à un troisième routeur de passerelle d'accès, AGR3, où se trouve le CN, la nouvelle relation de mappage d'identifiant et de localisateur du MN selon les informations du CN ;
le module de réacheminement de données étant conçu pour établir, après la réception de la requête de transfert, une relation de réacheminement avec l'AGR1 ; pour transmettre, selon une relation de réacheminement établie avec l'AGR2, le message de données reçu, en direction du MN vers l'AGR2 du RAN du MN pendant le transfert ;
l'AGR étant également conçu pour retourner, après la réception de la requête de transfert en provenance de l'AGR1, la réponse de transfert ; pour transmettre, après la réception d'une réponse de transfert en provenance de l'AGR2, une commande de transfert au MN par l'intermédiaire du RAN source ;
l'AID étant configuré pour chaque utilisateur et restant inchangé tout le temps dans un processus de mouvement.

14. AGR selon la revendication 13, dans lequel
le module de mise à jour de relation de mappage est en outre conçu pour initier, après l'établissement de la nouvelle relation de mappage d'identifiant et de localisateur du MN, une requête de mise à jour de mappage à un serveur de mappage, afin de demander la mise à jour d'une relation de mappage entre l'AID et le RID du MN.

15. AGR selon la revendication 13, dans lequel
le module de réacheminement des données est conçu pour transmettre un message de données en direction du MN au MN après la réception d'un message de fin de transfert en provenance du RAN cible.

16. AGR selon la revendication 13, 14 ou 15 dans lequel
le module de mise à jour de relation de mappage est en outre conçu pour transmettre, après la notification à l'AGR3, où se trouve le CN, de la nouvelle relation de mappage d'identifiant et de localisateur du MN, une instruction de suppression à l'AGR1 du RAN source ;
module de mise à jour de relation de mappage est en outre conçu pour supprimer la relation de réacheminement selon l'instruction de suppression et/ou pour supprimer la relation de réacheminement dans un temps déterminé après l'établissement de la relation de réacheminement.

17. AGR selon la revendication 16, dans lequel
l'AGR comprend en outre un module de minutage et un module de gestion d'entrée,
le module de minutage étant conçu pour régler un cycle temporel d'un timer de sondage et notifier au module de gestion d'entrée quand le cycle temporel arrive à son terme ;
le module de gestion d'entrée est conçu pour stocker la table d'itinéraires de mappage d'identifiant et de localisateur de tous les CN en communication avec le MN, régler une étiquette de timer pour chaque entrée lors de l'établissement des entrées de la table d'itinéraires de mappage, une valeur d'initialisation de l'étiquette de timer étant une valeur entière réglée par défaut ; pour réinitialiser, lors de la recherche d'une entrée déterminée de la table d'itinéraires de mappage, à chaque fois, l'étiquette de timer correspondant à l'entrée de la table d'itinéraires de mappage à la valeur d'initialisation ; et, lors de la réception de la notification du module de minutage, sonder les entrées de la table d'itinéraires de mappage , réduire l'étiquette de timer correspondant à chaque entrée de la table d'itinéraires de mappage de 1 et supprimer une entrée déterminée de la table d'itinéraires de mappage lorsqu'il est détecté que l'étiquette de timer de l'entrée de la table d'itinéraires de mappage est égale à 0.
